# EUROPEAN PATENT APPLICATION

(11) **EP 3 764 475 A1**
(43) Date of publication of application: **13.01.2021**
(21) Application number: 19185925.5
(22) Date of filing: 12.07.2019
(51) Int. Cl.: H01R 13/11, G02B 6/42, H01R 12/72

(54) **HEAT TRANSFER DEVICE**

(71) Applicant: Nokia Solutions and Networks Oy, 02610 Espoo (FI)
(72) Inventor: SCHEPERS, Luc, 2018 Antwerp (BE)
(74) Representative: Nokia EPO representatives

(57) **Abstract**

An adapter, apparatus and method is described comprising: receiving a plug-in module within a housing; urging a thermally conductive resilient means that is coupled to, used with or forms part of the housing towards a heat transfer module in response to receiving said plug-in module; and transferring heat from the plug-in module to the heat transfer module via the resilient means and a thermally conductive material.

## Description

### Field

The present specification relates to a heat transfer device, for example for use with cooling a plug-in module.

### Background

Plug-in modules, such as connector modules, may require cooling. Although a number of developments have been made in this field, there remains a need for further developments.

### Summary

In a first aspect, this specification describes an adapter for mounting to an apparatus for receiving one or more plug-in modules, the adapter comprising: a thermally conductive resilient means (e.g. a leaf spring) for coupling to (or use with) a housing of the apparatus; and means for transferring heat from the resilient means to a heat transfer module (e.g. a heat sink, heat pipe, vapour chamber etc.), wherein, in use, the resilient means is urged towards said heat transfer module in response to receiving a first plug-in module within the housing of the apparatus. The first plug-in module may be a small form factor pluggable modules (e.g. an SFP-DD or QSFP module, as described further below).

The means for transferring heat from the resilient means to the heat transfer module may comprise a thermal interface material. The thermal interface material may, for example, comprise a strip of thermal interface material mounted to the resilient means or a thermally conductive gel.

In use, the resilient means may be urged into contact with a received plug-in module by the means for transferring heat. In this way, thermal conductivity between the plug-in module and the resilient means may be improved. Indeed, by urging the module down and the resilient means up, the presence of gaps that can reduce thermal conductivity in some known solutions can be reduced or avoided. In this way, mechanical tolerances may be accommodated.

The resilient means may be provided in a bent configuration in the absence of a plug-in module. The resilient means may be configured to at least partially straighten in the presence of a received plug-in module, such that the resilient means is urged towards said heat transfer module.

The heat transfer module may comprise an outer surface of the apparatus. Alternatively, or in addition, the heat transfer module may comprise a heat transfer module external to the apparatus. Moreover, said heat transfer module may comprise part of said adapter or apparatus.

In a second aspect, this specification describes an apparatus for receiving one or more plug-in modules comprising: a housing for receiving a first plug-in module (such as a small form factor pluggable module, e.g. an SFP-DD or QSFP module, as described further below); a thermally conductive resilient means (e.g. a leaf spring) that forms part of the housing, wherein, in use, the resilient means is urged towards a heat transfer module in response to receiving said first plug-in module; and means for transferring heat from the resilient means to said heat transfer module. In this way, the plug-in module and/or the housing may be cooled. In some embodiments, the resilient means is urged to meet the heat transfer module such that the heat transfer module does not need to be moved and so can remain in contact with the apparatus, thereby providing good thermal conductivity between the apparatus and the heat transfer module.

The said apparatus may further comprise: a second housing for receiving a second plug-in module; a second thermally conductive resilient means that is coupled to or forms part of the second housing, wherein, in the use, the second resilient means is urged towards a/the heat transfer module in response to receiving said second plug-in module; and means for transferring heat from the second resilient means to said heat transfer module. A heat transfer module may be in thermal contact with the first and second resilient means.

The means for transferring heat from the resilient means to the heat transfer module may comprise a thermal interface material. The thermal interface material may, for example, comprise a strip of thermal interface material mounted to the resilient means and/or a thermally conductive gel.

In use, the resilient means may be urged into contact with a received plug-in module by the means for transferring heat. In this way, thermal conductivity between the plug-in module and the resilient means may be improved. Indeed, by urging the module down and the resilient means up, the presence of gaps that can reduce thermal conductivity in some known solutions can be reduced or avoided. In this way, mechanical tolerances may be accommodated.

The resilient means may be provided in a bent configuration in the absence of a plug-in module. The resilient means may be configured to at least partially straighten in the presence of a received plug-in module, such that the resilient means is urged towards said heat transfer module.

The heat transfer module may comprise an outer surface of the apparatus. Alternatively, or in addition, the heat transfer module may comprise a heat transfer module external to the apparatus. Moreover, said heat transfer module may comprise part of said apparatus.

In a third aspect, there is described a system comprising: a plurality of housings, each configured to receive a plug-in module; a thermally conductive resilient means that is coupled to, used with or forms part of each housing, wherein, in use, each resilient means is urged towards a heat transfer module in response to receiving the respective plug-in module and wherein each resilient means comprises a means for transferring heat from said resilient means to said heat transfer module. The system may further comprise the said heat transfer module.

In a fourth aspect, this specification describes a method comprising: receiving a plug-in module within a housing; urging a thermally conductive resilient means (e.g. a leaf spring) that is coupled to, used with or forms part of the housing towards a heat transfer module (e.g. a heat sink, heat pipe, vapour chamber etc.) in response to receiving said plug-in module; and transferring heat from the plug-in module to the heat transfer module via the resilient means and a thermally conductive material. The plug-in module may be a small form factor pluggable module (e.g. an SFP-DD or QSFP module, as described further below).

In use, the resilient means may be urged into contact with a received plug-in module by a means for transferring heat. In this way, thermal conductivity between the plug-in module and the resilient means may be improved.

The resilient means may be provided in a bent configuration in the absence of a plug-in module. The resilient means may be configured to at least partially straighten in the presence of a received plug-in module, such that the resilient means is urged towards said heat transfer module.

In a fifth aspect, this specification describes an adapter for mounting to an apparatus for receiving one or more plug-in modules, the adapter comprising: a thermally conductive resilient device (e.g. a leaf spring) for coupling to or use with a housing of the apparatus; and a heat transfer element for transferring heat from the resilient device to a heat transfer module (e.g. a heat sink, heat pipe, vapour chamber etc.), wherein, in use, the resilient device is urged towards said heat transfer module in response to receiving a first plug-in module within the housing of the apparatus. The first plug-in module may be a small form factor pluggable modules (e.g. an SFP-DD or QSFP module, as described further below).

In a sixth aspect, this specification describes an apparatus for receiving one or more plug-in modules comprising: a housing for receiving a first plug-in module (such as a small form factor pluggable module); a thermally conductive resilient device (e.g. a leaf spring) that forms part of the housing, wherein, in use, the resilient device is urged towards a heat transfer module in response to receiving said first plug-in module; and a heat transfer element for transferring heat from the resilient device to said heat transfer module. In this way, the plug-in module and/or the housing may be cooled. In some embodiments, the resilient device is urged to meet the heat transfer module such that the heat transfer module does not need to be moved and so can remain in contact with the apparatus, thereby providing good thermal conductivity between the apparatus and the heat transfer module.

In a seventh aspect, there is described a system comprising: a plurality of housings, each configured to receive a plug-in module; a thermally conductive resilient device that is coupled to, used with or forms part of each housing, wherein, in use, each resilient means is urged towards a heat transfer module in response to receiving the respective plug-in module and wherein each resilient device comprises a heat transfer element for transferring heat from said resilient device to said heat transfer module. The system may further comprise the said heat transfer module.

### Brief description of the drawings

Example embodiments will now be described, by way of non-limiting examples, with reference to the following schematic drawings, in which:
FIG. 1 is an exploded block diagram of a system in accordance with an example embodiment;
FIG. 2 is a block diagram of a system in accordance with an example embodiment;
FIG. 3 is a block diagram showing interfaces between elements of an example embodiment;
FIG. 4 is a cross-section of a system in accordance with an example embodiment;
FIG. 5 is a cross-section of a system in accordance with an example embodiment;
FIG. 6 is a flow chart showing an algorithm in accordance with an example embodiment;
FIG. 7 shows a housing that may be used in example embodiments;
FIG. 8 shows an adapter that may be used with the housing of FIG. 7 in an example embodiment;
FIGS. 9 to 11 show housings in accordance with example embodiments;
FIG. 12 is a block diagram of a system in accordance with an example embodiment; and
FIG. 13 is a block diagram of a system in accordance with an example embodiment.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

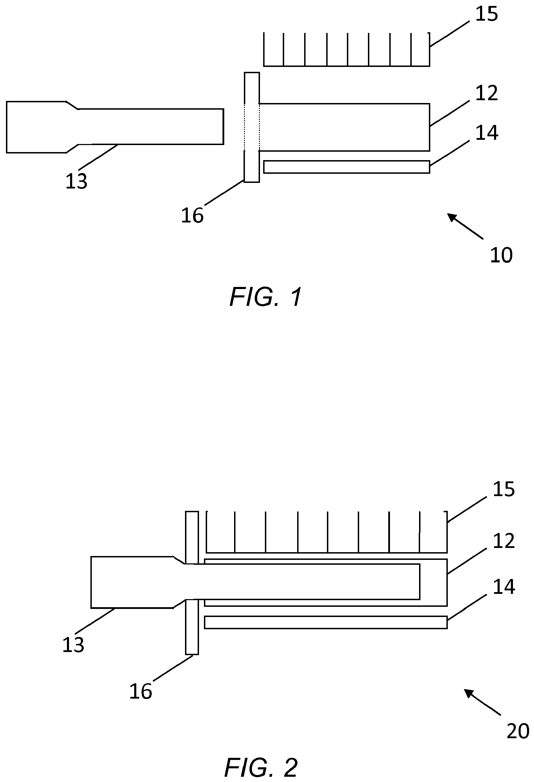

FIG. 1 is an exploded block diagram of a system, indicated generally by the reference numeral 10, in accordance with an example embodiment. FIG. 2 is a block diagram of a system 20 that shows an assembled version of the system 10.

The systems 10 and 20 comprise a housing 12, a plug-in module 13, a printed circuit board (PCB) 14 or some similar board, a heatsink 15 (or some other means for transferring heat) and a faceplate 16.

The housing 12 is mounted to the PCB 14 and is positioned such that the plug-in module 13 can be inserted through an opening in the faceplate 16 into the housing 12. The housing 12 may have an opening (not shown) allowing the plug-in module to be electrically connected to other parts of a system.

The plug-in module 13 may be a small form factor pluggable (SFP) module, such as an SFP-DD (double density) or QSFP (quad SFP) module. Such modules may be optical modules, but variants (such as copper modules) are possible. The housing 12 may be a so-called cage that receives the SFP module.

In the use of the systems 10 and 20, the plug-in module 13 may get hot. This is particularly true of optical plug-in modules, in which significant power (and hence significant heat) may be dissipated.

In the example systems 10 and 20, the heatsink 15 is placed above the housing 12 and is used to cool the plug-in module 13 and/or the housing 12. In some example embodiments, the extent to which heat can be dissipated is limited by the thermal conductivity between the plug-in module 13 and/or the housing 12 and the heatsink 15.

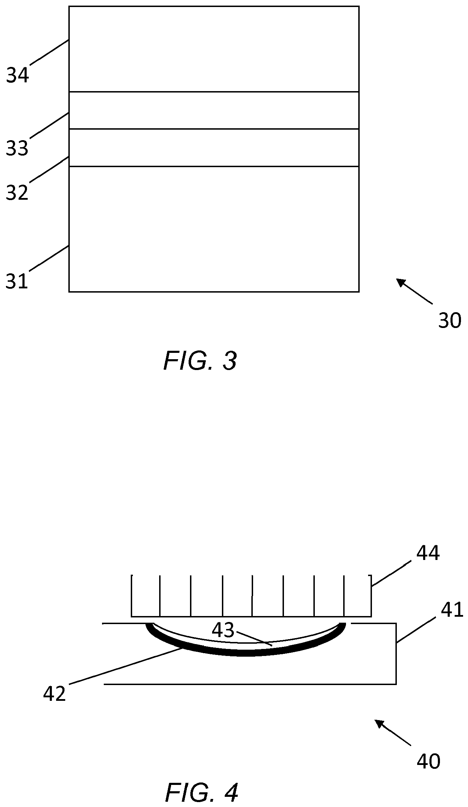

FIG. 3 is a block diagram, indicated generally by the reference numeral 30, showing interfaces between elements of an example embodiment.

The system 30 comprising an element 31 to be cooled (such as the plug-in module 13 and/or the housing 12 described above), a resilient means 32 (such as a spring), a thermal interface material 33 (or some other means for transferring heat) and a heat transfer module 34 (such as the heat sink 15). As described in detail below, the resilient means 32 and the thermal interface material 33 are used to transfer heat from the element 31 to the heat transfer module 34. The heat transfer module may, for example, be a heat sink, vapour chamber, heat pipe or other suitable module for cooling or transferring heat.

FIG. 4 is a cross-section of a system, indicated generally by the reference numeral 40, in accordance with an example embodiment. Thus system 40 comprises a housing 41 (e.g. similar to the housing 12 described above), a thermally conductive resilient means 42, a thermal interface material 43 and a heat transfer module 44 (e.g. similar to the heatsink 15). The housing 41, thermally conductive resilient means 42, thermal interface material 43 and heat transfer module 44 are examples of the element to be cooled 31, resilient means 32, thermal interface material 33 and heat transfer module 34 of FIG. 3 respectively.

The housing 41 is configured to receive a plug-in module (such as the module 13). The housing 41 may be mounted to a PCB (such as the PCB 14) or some similar board.

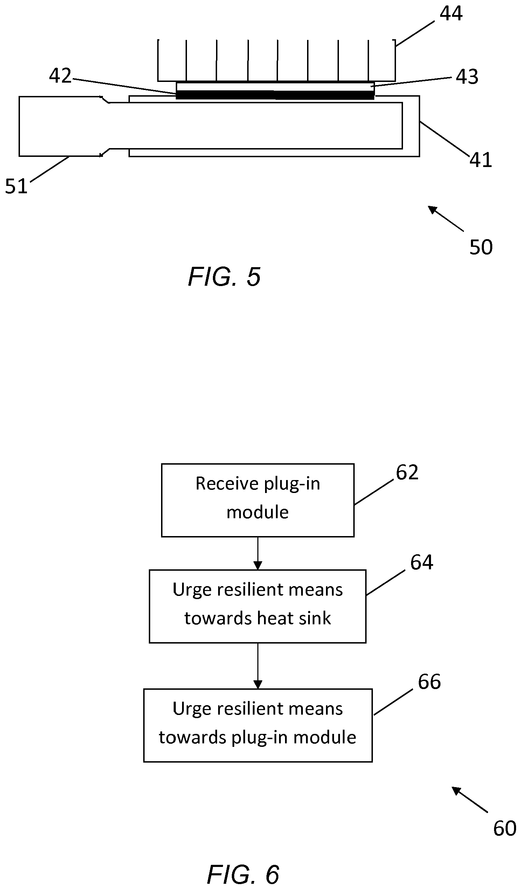

FIG. 5 is a cross-section of a system, indicated generally by the reference numeral 50, in accordance with an example embodiment. The system comprises the housing 41, the thermally conductive resilient means 42, the thermal interface material 43 and the heat transfer module 44 described above. The system 50 also comprises a plug-in module 51 (similar to the module 13) inserted in the housing 41. The plug-in module 51 may be inserted through a gap in a faceplate (not shown), as described above.

As shown in FIGS. 4 and 5, the resilient means 42 is urged towards the heat transfer module 44 in response to the plug-in module 51 being received by the housing 41. As a result of the resilient means (and hence the thermal interface material 43) being urged towards the heat transfer module, the thermal conductivity between the plug-in module 41 and the heat transfer module 44 may be relatively high. Thus, the interfaces described above with reference to FIG. 3 provide for effective heat dissipation.

In the system 40 in FIG. 4, the resilient means is provided in a bent configuration (in the absence of the plug-in module 51). As shown in FIG. 5, the resilient means 42 is configured to at least partially straighten in the presence of the plug-in module 51, such that the resilient means is urged towards the heat transfer module 44.

The resilient means 42 may be a leaf spring; however, alternative arrangements are possible.

In some embodiments, the resilient means 42 may be urged towards plug-in module 51 by the thermal interface material 43 (e.g. in response to the thermal interface material contacting the heat transfer module 44). Thus, the mechanical configuration of the system 50 may be such that the resilient means is generally pushed upwards by the insertion of the plug-in module 51 and the plug-in module is generally pushed downwards by the reaction of the thermal interface material 43. This tends to improve the thermal interfaces described with reference to FIG. 3 and may lead to the accommodation of mechanical tolerances in the system 50.

The thermal interface material 43 may be in the form of a strip of thermal interface material (e.g. a soft gap-filler with good thermal conductivity) attached to the resilient means 42 (best shown in FIG. 4); however, alternative arrangements are possible, such as the use of a thermally conductive gel. Alternatively, or in addition, at the bottom of the resilient means (e.g. the part in contact with the plug-in module 51), a thermal conductive coating may be provided to further increase the efficiency of heat transfer between the plug-in module and the resilient means.

As described above, heat from the plug-in module 51 may be dissipated using the heat transfer module 44. Furthermore, heat from the housing 41 may be dissipated by the heat transfer module (since the housing 41 is also in thermal communication with the heat transfer module 44 via the resilient means 42 and the thermal interface material 43, as shown in FIG. 5).

The heat transfer module 44 is mounted on top of the combination housing 41 and resilient means 42 and therefore touches the housing 41. In use, the heat transfer module 44 typically remains in contact with the housing 41 such that the heat transfer module is not lifted away from the housing when a plug-in module is inserted, thereby retaining good thermal contact between the heat transfer module and the housing.

FIG. 6 is a flow chart showing an algorithm, indicated generally by the reference numeral 60, in accordance with an example embodiment.

The algorithm 60 starts at operation 62, where a plug-in module (such as the plug-in module 13 or 51) is received within a housing (such as the housing 12 or 41).

At operation 64, a resilient means (such as the resilient means 32 or 42) that is coupled to or forms part of the housing is urged towards a heat transfer module (such as the heat transfer module 15, 34 or 43) in response to receiving said plug-in module within the housing. By urging the resilient means to meet the heat transfer module, the heat transfer module may not need to move and so may remain in contact with the housing, thereby tending to improve heat dissipation from the housing.

Heat can therefore be transferred from the plug-in module and/or the housing to the heat transfer module via the resilient means and a thermally conductive material (such as the thermally conductive material 33 or 43 described above).

At operation 66 (which may be optional), the resilient means (such as the resilient means 32 or 42) is urged towards the plug-in module by the thermally conductive material.

The resilient means may therefore be used for "picking up" heat generated by the plug in module (and the housing). Heat picked up in this manner can be delivered to the heat transfer module along a path having high thermal conductivity. The resilient means can therefore be used to ensure a good thermal connection between the heat generating aspects of the systems described herein and the heat transfer module to dissipate the generated heat.

The provision of a resilient means and a thermal interface material provide significant flexibility in the systems described herein. This enables mechanical tolerances to be absorbed without significantly affecting heat transfer properties of the system. Moreover, a contact area between plug-in modules and heat transfer modules can be maximised.

As noted above, the systems described herein enable mechanical tolerances to be tolerated. For example, the provision of a thermal interface material (which may have a degree of flexibility) may enable imperfectly flat heat transfer modules to have a good thermal connection with the resilient means.

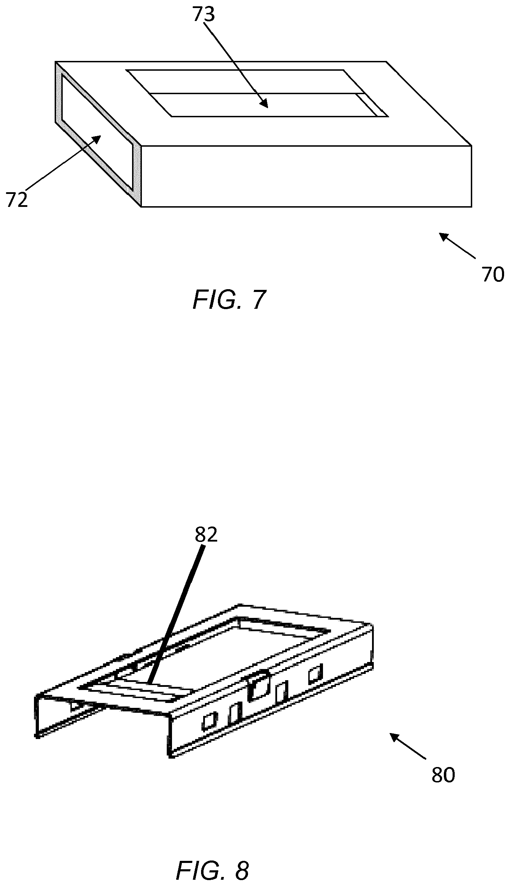

FIG. 7 shows a housing, indicated generally by the reference numeral 70, that may be used in example embodiments. The housing 70 is an example implementation of the housing 12 described above. The housing 70 includes an opening 72 for receiving a plug-in module (such as the modules 13 or 51). The housing also includes an opening 73 that may be used to enable a plug-in module to contact a heat transfer module (such as the heat sink 15 or 44).

FIG. 8 shows an adapter 80 that may be used, for example, with the housing 70 described above. The adapter 80 comprises a thermally conductive resilient means 82 (e.g. a leaf spring) for coupling to a housing (such as the housing 70). For example, the adapter 80 may be mounted to the housing 70 such that the thermally conductive resilient means 82 sits in the opening 73. In use, the resilient means 82 may be urged towards a heat transfer module (e.g. a heat sink) when a plug-in module is received through the opening 72 of the housing 70.

The resilient means 82 may include a strip of thermal interface material (TIM). The thermal interface material may be a soft gap-filler with a good thermal conductivity or a gel. Thus, when a plug-in device enters the opening 72, the resilient means may be moved from a bent configuration (similar to that described above with reference to FIG. 4) to a straightened/horizontal configuration (similar to that described above with reference to FIG. 5). Because the thermal interface material is rather flexible, the contact zone between the resilient means and the plug-in module will tend to be stretched over the maximum possible surface of the plug-in module. To further optimise the heat transfer between a plug-in module and the resilient means, a thermally conductive coating may be applied on the inner side of the resilient means.

In use, the resilient means 82 is lifted in response to the insertion of a plug-in module and tends to push the thermal interface material into contact with a heat transfer module positioned above the opening 73. At the same time, the thermal interface material will tend to push back the resilient means 82 such that the contact between the resilient means and the plug-in module is improved.

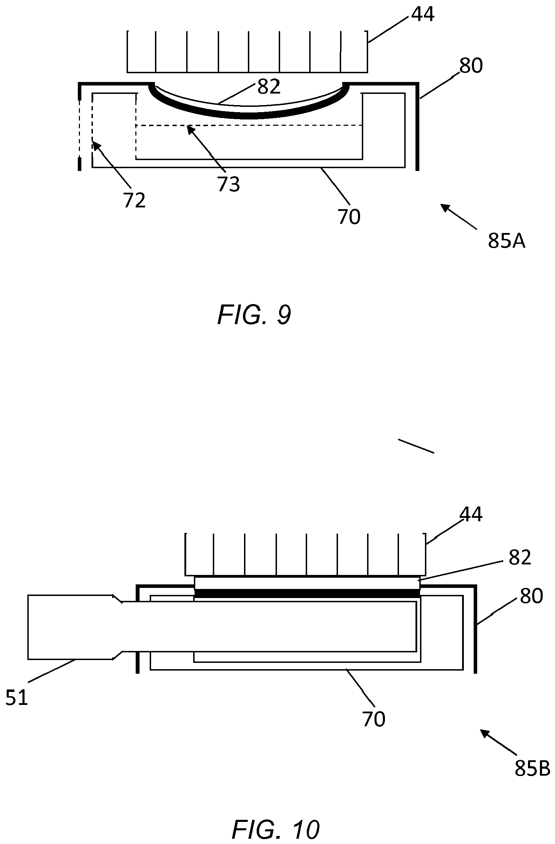

FIG. 9 shows a housing, indicated generally by the reference numeral 85A, in accordance with an example embodiment. The housing 85A comprises the housing 70 described above with reference to FIG. 7 and the adapter 80 described above with reference to FIG. 8.

Thus, the housing 85A comprises the opening 72 for receiving a plug-in module, the opening 73 and the thermally conductive resilient means 82 that sits in the opening 73.

FIG. 10 shows a housing, indicated generally by the reference numeral 85B, in accordance with an example embodiment. The housing 85B comprises the housing 70 described above with reference to FIG. 7 and the adapter 80 described above with reference to FIG. 8 and further comprises a plug-in module 51.

The plug-in module is received within the opening 72. As described above, when the plug-in module 51 enters the opening 72, the resilient means 82 may be moved from a bent configuration (as shown in FIG. 9) to a straightened/horizontal configuration shown in FIG. 10. In use, the resilient means 82 is lifted in response to the insertion of a plug-in module and tends to push thermal interface material into contact with the heat transfer module 44 positioned above the opening 73.

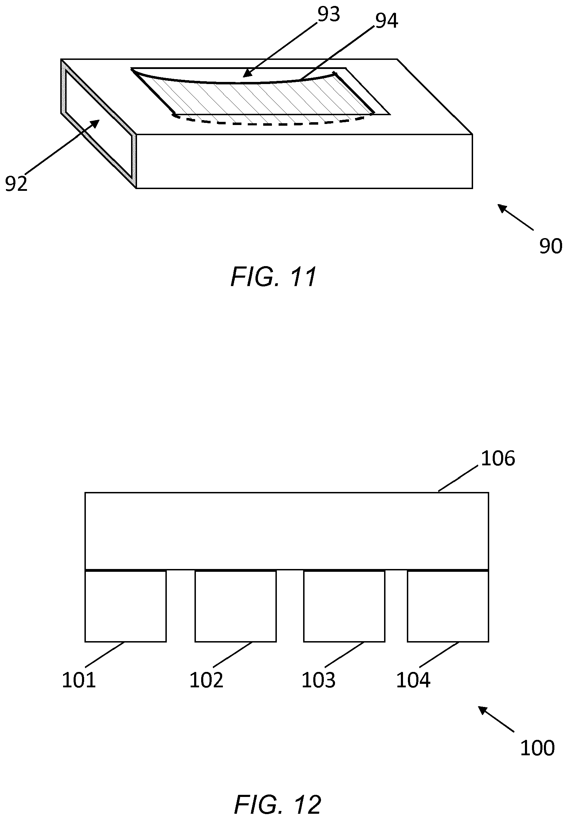

FIG. 11 shows a housing, indicated generally by the reference numeral 90, in accordance with an example embodiment. The housing 90 has a number of similarities with the housing 70 described above and including an opening 92 (similar to the opening 72) for receiving a plug-in module (such as the modules 13 or 51) and an opening 93 (similar to the opening 73) that may be used to enable a plug-in module to contact a heat transfer module (such as the heat sink 15 or 44).

The housing 90 includes a resilient means 94 that is provided in a bent configuration (in the absence of a plug-in module). The resilient means 94 is configured to at least partially straighten in response to a plug-in module being inserted through the opening 92. Thus, the resilient means 94 performs a similar function to the resilient means 82 described above, but is an integral part of the housing 90, rather than being provided as part of an adapter (such as the adapter 80). The resilient means 94 may include a thermal interface material (e.g. a strip of thermal interface material or a thermally conductive gel) as described in detail above.

Each of the resilient means 42, 82 and 94 may be implemented as leaf springs; however, as noted above, alternative arrangements are possible.

FIG. 12 is a block diagram of a system, indicated generally by the reference numeral 100, in accordance with an example embodiment.

The system 100 comprises a plurality of housings (first, second, third and fourth housings 101 to 104 are shown). Each of the plurality of housings is able to receive a plug-in module (such as the plug-in modules described above). The system 100 also comprises a heat transfer module 106 (such as a heat sink).

Each of the housings 101 to 104 includes a thermally conductive resilient means (not shown) that is coupled to or forms part of the respective housing (e.g. the resilient means may be formed in a housing 41, an adapter 80 or a housing 90, as described above with reference to FIGS. 4, 8 and 11 respectively). In the event that a plug-in module is inserted into one of said housings, the thermally conductive resilient means of that housing (or coupled to said housing) is urged towards the heat transfer module 106. Each thermally conductive resilient means may also include a thermal interface material (not shown) for transferring heat from said resilient means to said heat transfer module 106, as discussed in detail above. The arrangements described herein may improve modularity, as the surface of the heat sink 106 attaching the housings 101-104 may be formed flat, and the system may comprise any suitable number of housings attached to the heat sink. The housings may be placed side by side, or there may be gaps between the housings. The gaps may be filled later with further housings or other modules if needed. The thermal interface material and resilient means may provide greater tolerances in size when installing the housings and heat sinks and still may provide good thermal conductivity. Using the resilient means as depicted in any of the aforementioned embodiments may improve the thermal connectivity and simplify the thermal design.

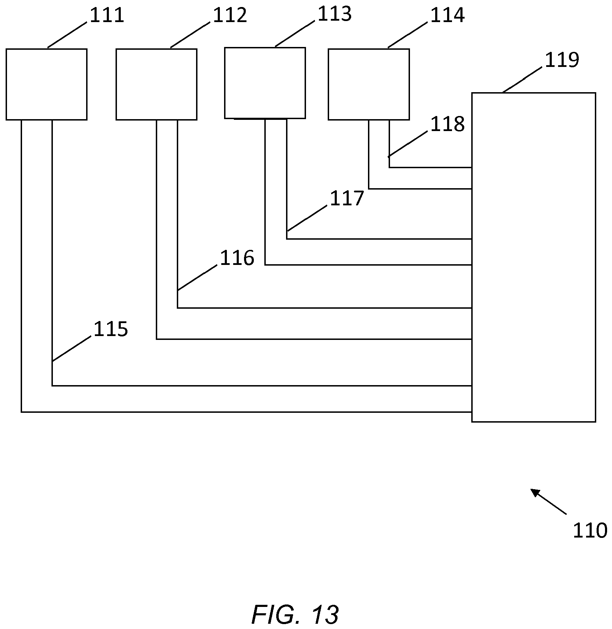

FIG. 13 is a block diagram of a system, indicated generally by the reference numeral 110, in accordance with an example embodiment.

The system 110 comprises a plurality of housings (first, second, third and fourth housings 111 to 114 are shown). Each of the plurality of housings is able to receive a plug-in module (such as the plug-in modules described above). The system 110 also includes a plurality of heat pipes for transferring heat away from the housings 111 to 114. More specifically, the system 110 comprising a first heat pipe 115, a second heat pipe 116, a third heat pipe 117 and a fourth heat pipe 118 for transferring heat away from the first to fourth housings 111 to 114 respectively. The heat transferred by the heat pipes may be dissipated at a cooling module 119. Examples of cooling modules include fans, although many alternative arrangements (e.g. liquid cooling arrangements) will be apparent to those skilled in the art.

If desired, the different functions discussed herein may be performed in a different order and/or concurrently with each other. Furthermore, if desired, one or more of the above-described functions may be optional or may be combined. Similarly, it will also be appreciated that the flow diagram of FIG. 6 is an example only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification. For example, although the embodiments described above include the provision of a heat transfer module (such as a heat sink), this is not essential to all embodiments. For example, the output surface of a housing for receiving a plug-in module may be used to implement the functionality of a heat transfer module.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An adapter for mounting to an apparatus for receiving one or more plug-in modules, the adapter comprising:
a thermally conductive resilient means for coupling to or use with a housing of the apparatus; and
means for transferring heat from the resilient means to a heat transfer module, wherein, in use, the resilient means is urged towards said heat transfer module in response to receiving a first plug-in module within the housing of the apparatus.

2. An apparatus for receiving one or more plug-in modules comprising:
a housing for receiving a first plug-in module;
a thermally conductive resilient means that forms part of the housing, wherein, in use, the resilient means is urged towards a heat transfer module in response to receiving said first plug-in module; and
means for transferring heat from the resilient means to said heat transfer module.

3. An adapter or an apparatus as claimed in claim 1 or claim 2, wherein the resilient means comprises a leaf spring.

4. An adapter or an apparatus as claimed in any one of claims 1 to 3, wherein the means for transferring heat from the resilient means to the heat transfer module comprises a thermal interface material.

5. An adapter or an apparatus as claimed in claim 4, wherein the thermal interface material comprises a strip of thermal interface material mounted to the resilient means.

6. An adapter or an apparatus as claimed in any one of the preceding claims, wherein, in use, the resilient means is urged into contact with a received plug-in module by the means for transferring heat.

7. An adapter or an apparatus as claimed in any one of the preceding claims, wherein the resilient means is provided in a bent configuration in the absence of a plug-in module and wherein the resilient means is configured to at least partially straighten in the presence of a received plug-in module, such that the resilient means is urged towards said heat transfer module.

8. An adapter or an apparatus as claimed in any one of the preceding claims, wherein the heat transfer module comprises an outer surface of the apparatus.

9. An adapter or an apparatus as claimed in any one of the preceding claims, wherein the heat transfer module comprises a heat transfer module external to the apparatus.

10. An adapter or an apparatus as claimed in claim 9, further comprising said heat transfer module.

11. An apparatus as claimed in any one of claims 2 to 10, further comprising:
a second housing for receiving a second plug-in module;
a second thermally conductive resilient means that is coupled to or forms part of the second housing, wherein, in the use, the second resilient means is urged towards a/the heat transfer module in response to receiving said second plug-in module; and
means for transferring heat from the second resilient means to said heat transfer module.

12. An apparatus as claimed in claim 11, further comprising a heat transfer module in thermal contact with the first and second resilient means.

13. A system comprising:
a plurality of housings, each configured to receive a plug-in module; and
a thermally conductive resilient means that is coupled to, used with or forms part of each housing, wherein, in use, each resilient means is urged towards a heat transfer module in response to receiving the respective plug-in module and wherein each resilient means comprises a means for transferring heat from said resilient means to said heat transfer module.

14. A system as claimed in claim 13, further comprising said heat transfer module.

15. A method comprising:
receiving a plug-in module within a housing;
urging a thermally conductive resilient means that is coupled to, used with or forms part of the housing towards a heat transfer module in response to receiving said plug-in module; and
transferring heat from the plug-in module to the heat transfer module via the resilient means and a thermally conductive material.
